# EUROPEAN PATENT APPLICATION

(11) **EP 4 836 105 A1**
(43) Date of publication of application: **04.11.2026**
(21) Application number: 24912181.5
(22) Date of filing: 27.11.2024
(51) Int. Cl.: H01M 50/107, H01M 50/167

(54) **NON-AQUEOUS ELECTROLYTE SECONDARY BATTERY**

(30) Priority: 26.12.2023 JP 2023219131
(71) Applicant: Panasonic Intellectual Property Management Co., Ltd., Kadoma-shi, Osaka 571-0057 (JP)
(72) Inventor: OTAKE, Yuji, Kadoma-shi, Osaka 571-0057 (JP)
(74) Representative: Novagraaf International SA
(86) International application number: PCT/JP2024/042051
(87) International publication number: WO 2025/142291

(57) **Abstract**

A non-aqueous electrolyte secondary battery (10) comprises: an electrode body (14); a bottomed cylindrical exterior can (20); and a sealing body (30) that closes an opening (24) of the exterior can (20). The non-aqueous electrolyte secondary battery is characterized in that: an annular groove (23) that is recessed inward in the radial direction of the exterior can is provided in the side surface of the exterior can (20); a protective member (40) is provided inside the annular groove (23); the thickness direction of the protective member (40) is parallel to the axial direction of the exterior can (20); and the protective member (40) is in contact with surfaces on both sides of the annular groove (23) in the width direction.

## Description

### TECHNICAL FIELD

The present disclosure relates to a non-aqueous electrolyte secondary battery.

### BACKGROUND

A non-aqueous electrolyte secondary battery including an electrode assembly having a positive electrode and a negative electrode, a cylindrical housing can with a bottom, containing the electrode assembly, and a sealing assembly that closes an opening portion of the housing can has been conventionally known. The sealing assembly is supported on an upper face of an annular groove disposed on a side face of the housing can, and is crimped and fixed on the opening portion of housing can. The sealing assembly is thereby secured on an upper part of the housing can.

Patent Document 1 discloses a non-aqueous electrolyte secondary battery including an insulative coating layer disposed on the entire side face, including the inside of an annular groove, of a housing can. Patent Document 1 further discloses that including a coating layer enables a reduction in occurrence of short circuit caused by dust of a metal material forming the housing can during the production process.

### CITATION LIST

### PATENT LITERATURE

[Patent Document 1] JP 2005-071710 A

### SUMMARY

In a non-aqueous electrolyte secondary battery, abnormal heat generation of the electrode assembly may occur by application of a large current to the electrode assembly in the event of occurrence of external short circuit in a charging state of the battery, for example. This may further cause generation of gas within the battery to thereby increase the internal pressure of the interior of the battery and damage the housing can. The damage of the housing can further causes jetting of the gas through the damaged portions, which is not desirable in terms of securing battery safety.

Studies by the present inventors have revealed that the damage to the housing can in the event of battery abnormality described above may occur in an annular groove disposed in the housing can. It is therefore a significant object to inhibit damage to the annular groove at the time of occurrence of abnormality of a battery.

In accordance with an aspect of the present disclosure, a non-aqueous electrolyte secondary battery includes: an electrode assembly including a positive electrode and a negative electrode; a non-aqueous electrolyte; a cylindrical housing can having a bottom, the housing can housing the electrode assembly and the non-aqueous electrolyte; and a sealing assembly that closes an opening portion of the housing can. The housing can includes, on a side face of the housing can, an annular groove that is recessed radially inward of the housing can. A protective member is disposed within the annular groove. The protective member has a thickness direction that is parallel to an axial direction of the housing can, and is in contact with opposite faces, in a width direction, of the annular groove.

In accordance with another aspect of the present disclosure, a non-aqueous electrolyte secondary battery includes: an electrode assembly including a positive electrode and a negative electrode; a non-aqueous electrolyte; a cylindrical housing can having a bottom, the housing can housing the electrode assembly and the non-aqueous electrolyte; and a sealing assembly that closes an opening portion of the housing can. The housing can includes, on a side face of the housing can, an annular groove that is recessed radially inward of the housing can. A protective member is disposed within the annular groove. A ratio of an area of the protective member within the annular groove relative to an area of a space of the annular groove in an axial cross sectional view of the housing can is equal to or greater than 80%.

The non-aqueous electrolyte secondary battery according to an embodiment of the present disclosure enables inhibition of damage to the annular groove at the time of occurrence of abnormality of the battery. It is therefore possible to provide a non-aqueous electrolyte secondary battery with high level of safety.

### BRIEF DESCRIPTION OF DRAWINGS

[FIGURE 1] FIG. 1 is an axial cross sectional view of a non-aqueous electrolyte secondary battery according to an example embodiment.
[FIGURE 2] FIG. 2 is an enlarged view of the vicinity of an annular groove disposed in a housing can illustrated in FIG. 1.
[FIGURE 3] FIG. 3 is a perspective view of a protective member of a non-aqueous electrolyte secondary battery according to an example embodiment.
[FIGURE 4] FIG. 4 is an axial cross sectional view of a non-aqueous electrolyte secondary battery according to a further example embodiment, and is an enlarged view of the vicinity of an annular groove disposed in a housing can.
[FIGURE 5] FIG. 5 is an axial cross sectional view of a non-aqueous electrolyte secondary battery according to a further example embodiment, and is an enlarged view of the vicinity of an annular groove disposed in a housing can.

### DESCRIPTION OF EMBODIMENTS

A non-aqueous electrolyte secondary battery according to an example embodiment of the present disclosure will be described in detail below by reference to the drawings. The embodiment described below is only an example, and the present disclosure is not limited to the embodiment below. Further, any embodiments including selective combinations of elements of the embodiment described below are encompassed in the present disclosure.

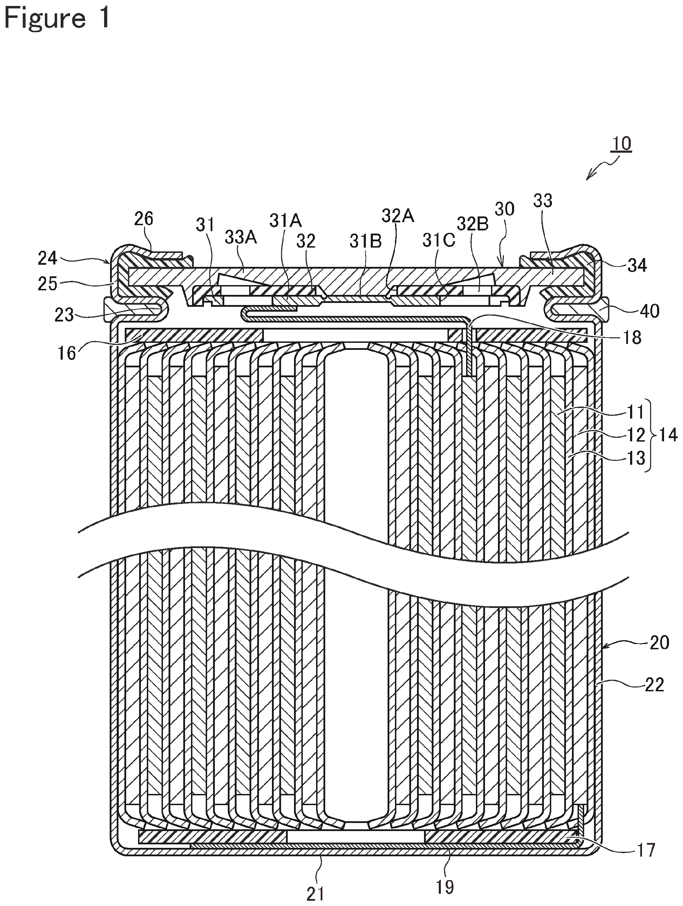

FIG. 1 is an axial cross sectional view of a non-aqueous electrolyte secondary battery 10 according to an example embodiment. As illustrated in FIG. 1, the non-aqueous electrolyte secondary battery 10 includes an electrode assembly 14, a non-aqueous electrolyte (not shown), and a housing can 20 that houses the electrode assembly 14 and the non-aqueous electrolyte. The housing can 20 is a cylindrical metallic container with a bottom, which is open on one axial end. An opening portion 24 of the housing can 20 is closed with a sealing assembly 30. In the following description, a side of the non-aqueous electrolyte secondary battery 10 toward the sealing assembly 30 in the axial direction (height direction) is defined as an "upper" side and a side of the non-aqueous electrolyte secondary battery 10 toward a bottom portion 21 of the housing can 20 is defined as a "lower" side.

The electrode assembly 14 includes a positive electrode 11, a negative electrode 12, and a separator 13, and has a configuration in which the positive electrode 11 and the negative electrode 12 are wound spirally with the separator 13 interposed between the positive electrode 11 and the negative electrode 12. The positive electrode 11, the negative electrode 12, and the separator 13 are all belt-shape elongated members, and are alternately laminated in the radial direction of the electrode assembly 14 by being wound spirally. The negative electrode 12 is formed one size larger than the positive electrode 11 to prevent precipitation of lithium. That is, the negative electrode 12 is longer than the positive electrode 11 in the longitudinal direction and the width direction (short-side direction). The separator 13 is one size larger than at least the positive electrode 11, and two separators 13 are disposed to sandwich the positive electrode 11. The non-aqueous electrolyte secondary battery 10 includes insulating plates 16 and 17 disposed above and below the electrode assembly 14, respectively.

The positive electrode 11 includes a positive electrode core and a positive electrode mixture layer disposed on the positive electrode core. The positive electrode core may include a foil of a metal that is stable in a potential range of the positive electrode 11, such as aluminum or an aluminum alloy, and a film with the metal disposed on a surface layer thereof. The positive electrode mixture layer includes a positive electrode active material, a conductive agent, and a binder, and is preferably disposed on each side of the positive electrode core except a positive electrode core exposed portion (not shown) on which a positive electrode lead 18 is welded. The positive electrode 11 may be fabricated by coating the positive electrode core with a positive electrode mixture slurry containing the positive electrode active material, the conductive agent, and the binder, for example, letting the coating film dry and then compressing to form the positive electrode mixture layer on each side of the positive electrode core.

The positive electrode mixture layer contains a granulated lithium metal composite oxide as the positive electrode active material. A lithium metal composite oxide is a composite oxide containing metal elements such as Co, Mn, Ni, and Al in addition to Li. The metal element comprising the lithium metal composite oxide is at least one selected from the group consisting of, for example, Mg, Al, Ca, Sc, Ti, V, Cr, Mn, Fe, Co, Ni, Cu, Zn, Ga, Ge, Y, Zr, Sn, Sb, W, Pb, and Bi. Among these metal elements, at least one selected from the group consisting of Co, Ni, and Mn is preferable. Examples of suitable composite oxides include a lithium metal composite oxide containing Ni, Co, and Mn, and a lithium metal composite oxide containing Ni, Co, and Al.

Examples of the conductive agent included in the positive electrode mixture layer include carbon black such as acetylene black and Ketjen black, graphite, carbon nanotubes (CNT), carbon nanofibers, graphene, and other carbon materials. Examples of the binder included in the positive electrode mixture layer include fluorinated resins such as polytetrafluoroethylene (PTFE) and polyvinylidene fluoride (PVDF), polyacrylonitrile (PAN), polyimide, acrylic resins, and polyolefin. In addition, these resins may be used in combination with carboxymethyl cellulose (CMC) or its salts, polyethylene oxide (PEO), and the like.

The negative electrode 12 includes a negative electrode core and a negative electrode mixture layer formed on the negative electrode core. The negative electrode core may be a foil of a metal that is stable in a potential range of the negative electrode 12 such as copper or a copper alloy or a film with the metal disposed on a surface layer. The negative electrode mixture layer includes a negative electrode active material, a binder, and, if necessary, a conductive agent, and is preferably disposed on both sides of the negative electrode core excluding a negative electrode core exposed portion (not shown) where a negative electrode lead 19 is welded. The negative electrode can be fabricated by coating a surface of the negative electrode core with a negative electrode mixture slurry containing the negative electrode active material and the binder, for example, leaving the coating film dry, and then compressing to form the negative electrode mixture layer on each side of the negative electrode core.

The negative electrode mixture layer typically contains, as the negative electrode active material, a carbon material that reversibly occludes and releases lithium ions. Preferable examples of the carbon material include a graphite including a natural graphite such as a flake graphite, a massive graphite, or an earthy graphite, or an artificial graphite such as massive artificial graphite (MAG) or graphitized mesophase carbon microbeads (MCMB). The negative electrode active material may also be a material containing at least one of an element that is alloyed with Li such as Si and Sn, or a material containing such an element. Among these materials, a composite material containing Si is preferable.

A preferable example of the composite material containing Si includes a material containing Si fine particles dispersed in an SiO₂ phase or a silicate phase such as lithium silicate, or a material containing Si fine particles dispersed in amorphous carbon phase. A conductive layer such as a carbon coat, for example, is formed on the particle surface of this composite material.

As in the case of the positive electrode mixture layer, although fluorine-containing resin, PAN, polyimide, acrylic resin, and polyolefin, for example, can be used for the binder included in the negative electrode mixture layer, styrene butadiene rubber (SBR) is preferably used. In addition, the negative electrode mixture layer preferably contains CMC or its salts, polyacrylic acid (PAA) or its salts, or polyvinyl alcohol (PVA), for example. In particular, SBR is preferably used in combination with CMC or its salts, PAA or its salts, or the like. The negative electrode mixture layer may include a conductive agent such as CNT.

A porous sheet with ion permeability and insulation properties is used as the separator 13. Specific examples of the porous sheet include microporous thin films, woven fabrics, and non-woven fabrics. Polyolefins such as polyethylene and polypropylene, and cellulose are preferable materials for the separator 13. The separator 13 may have a single-layer structure or a multi-layer structure. In addition, a highly heat-resistant resin layer such as aramid resin may be formed on a surface of the separator 13. A filler layer including an inorganic filler may be formed at an interface between the separator 13 and at least one of the positive electrode 11 and the negative electrode 12.

A positive electrode lead 18 is connected to the positive electrode 11 and a negative electrode lead 19 is connected to a winding end-side of the negative electrode 12. The positive electrode lead 18 extends through a through-hole in the insulating plate 16 toward the sealing assembly 30, and the negative electrode lead 19 extends outside of the insulating plate 17 toward the bottom portion 21 of the housing can 20. The positive electrode lead 18 is connected to a lower surface of an internal terminal plate 31 of the sealing assembly 30 by welding or the like to enable the sealing assembly 30 to function as a positive electrode terminal. In addition, the negative electrode lead 19 is connected to an inner surface of the bottom portion 21 of the metallic housing can 20 by welding or the like to enable the housing can 20 to function as a negative electrode terminal.

The non-aqueous electrolyte has lithium-ion conductivity. The non-aqueous electrolyte may be a liquid electrolyte (electrolytic solution) or a solid electrolyte.

The liquid electrolyte (electrolytic solution) contains a non-aqueous solvent and an electrolyte salt dissolved in the non-aqueous solvent. As the non-aqueous solvent, esters, ethers, nitriles, amides, and mixtures of two or more of these substances are used, for example. Examples of the non-aqueous solvent include ethylene carbonate (EC), ethyl methyl carbonate (EMC), dimethyl carbonate (DMC), diethyl carbonate (DEC), and a mixture of these solvents. The non-aqueous solvent may contain halogen substitutes (for example, fluoroethylene carbonate) in which at least some of the hydrogen of the solvents are replaced with halogen atoms such as fluorine. For example, lithium salts such as LiPF₆ are used as the electrolyte salts.

As the solid electrolyte, a solid or gel polymer electrolyte, an inorganic solid electrolyte, and the like can be used, for example. As the inorganic solid electrolyte, known materials used in all-solid-state lithium-ion secondary batteries and the like (for example, oxide-based solid electrolytes, sulfide-based solid electrolytes, and halogen-based solid electrolytes) can be used. A polymer electrolyte contains, for example, a lithium salt and a matrix polymer or a non-aqueous solvent, a lithium salt, and a matrix polymer. As the matrix polymer, a polymer material that absorbs a non-aqueous solvent and becomes a gel is used, for example. Examples of polymer materials include fluorine resins, acrylic resins, and polyether resins.

The housing can 20 is a cylindrical container having a bottom, with one side in the axial direction being open. The housing can 20 has the bottom portion 21 and a side face portion 22 constituting a side wall of the non-aqueous electrolyte secondary battery 10. The side face portion 22 is a portion of the housing can 20 excluding the bottom portion 21 and includes an annular groove 23 which will be described below and an opening portion 24.

The annular groove 23 is a portion of the side face portion 22 that is recessed radially inward and is disposed annularly along the circumferential direction of the housing can 20. The annular groove 23 supports the sealing assembly 30 on the top face of the annular groove 23. The annular groove 23 can be formed by, for example, spinning a portion of the side face portion 22 radially inward to make the side face portion to be annularly recessed radially inward. The width of the annular groove 23 (the axial length) is not particularly limited, and is greater than or equal to 0.1 mm and equal to or less than 2.0 mm. The depth (radial length) of the annular groove 23 is not particularly limited and is equal to or greater than 0.5 mm and equal to or less than 5.0 mm. As will be described in detail below, a protective member 40 having an annular shape in its plan view, is disposed within the annular groove 23.

The opening portion 24 is a region of the side face portion 22 located above the annular groove 23, and constitutes an opening of the housing can 20. At the time of crimping and fixing the sealing assembly 30 onto the housing can 20, the opening portion 24 is folded radially inward. The opening portion 24 thus has an opening side face portion 25 constituting a portion of the side face of the non-aqueous electrolyte secondary battery 10 and covering the outer periphery of a gasket 34, and a crimped portion 26 constituting a portion of the top face of the non-aqueous electrolyte secondary battery 10 and extending radially inward. In the present embodiment, the radially inward end of the crimped portion 26 is located further radially outward than the radially inward end of the gasket 34. Thus, a portion of the top face of the gasket 34 is not covered with the crimped portion 26.

The sealing assembly 30 is a disk-shaped member having a safety valve. The sealing assembly 30 has a structure in which the internal terminal plate 31, an insulating member 32, and an external terminal plate 33 are stacked sequentially from the top side adjacent the electrode assembly 14.

The internal terminal plate 31 is a metal plate that includes a thick portion 31A to which the positive electrode lead 18 is connected and a thin central portion 31B that is to be detached from the thick portion 31A when the internal pressure of the battery exceeds a predetermined threshold. The thick portion 31A includes a plurality of vent holes 31C.

The insulating member 32 provides electrical isolation between the internal terminal plate 31 and the external terminal plate 33 except their connection portion. The insulating member 32 includes an opening portion 32A in the radially center portion, and also has a vent hole 32B in a portion that overlaps with the vent hole 31C of the internal terminal plate 31.

The external terminal plate 33 constitutes a part of the top surface of the non-aqueous electrolyte secondary battery 10, and is disposed opposite the internal terminal plate 31, with the insulating member 32 being interposed between the external terminal plate 33 and the internal terminal plate 31. The external terminal plate 33 includes a thin portion 33A that ruptures when the internal pressure of the secondary battery 10 exceeds a predetermined threshold. The external terminal plate 33 is welded or otherwise connected to the central portion 31B of the internal terminal plate 31. Further, a radially outward portion of the external terminal plate 33 is disposed between the crimped portion 26 formed by bending the opening of the housing can 20 inward and the annular groove 23, with the gasket 34 being disposed between the crimped portion 26 and the annular groove 23.

Upon the rise of the internal pressure due to an abnormality occurring in the non-aqueous electrolyte secondary battery 10, a high-temperature gas that is generated pushes the internal terminal plate 31 upward and ruptures the internal terminal plate 31 to separate the central portion 31B from the thick portion 31A, causing the external terminal plate 33 to deform so as to protrude outward of the battery. This interrupts a current path in the sealing assembly 30. With further rise in the internal pressure of the non-aqueous electrolyte secondary battery 10 after the interruption of the current path, the thin portion 33A of the external terminal plate 33 ruptures, which creates an exhaust port for gas in the external terminal plate 33.

The structure of the sealing assembly 30 is not limited to the structure illustrated in FIG. 1. The sealing assembly 30 may have a convex cap that covers the external terminal plate 33, for example.

The gasket 34 is a flexible insulating member. The gasket 34 electrically isolates the sealing assembly 30 serving as the positive electrode terminal from the housing can 20 serving as the negative electrode terminal, and is vertically compressed to thereby secure airtightness within the housing can 20. Material of the gasket 34 may be any compressible insulating material and is not particularly limited, and may be, for example, polypropylene (PP), polyphenylene sulfide (PPS), polyethylene (PE), polybutylene terephthalate (PBT), perfluoroalkoxyalkane (PFA), polytetrafluoroethylene (PTFE), or polyamide (PA).

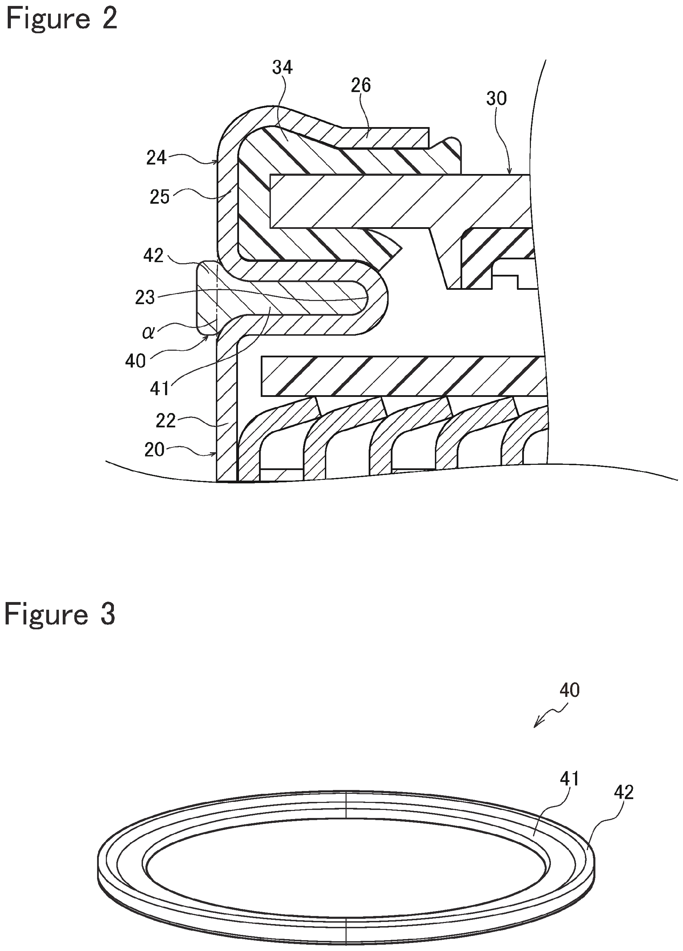

With further reference to FIG. 2 and FIG. 3, the protective member 40 will be described in detail. FIG. 2 is an enlarged view of a portion in the vicinity of the annular groove 23 illustrated in FIG. 1, and FIG. 3 is a perspective view of the protective member 40.

As illustrated in FIG. 2, the protective member 40 is disposed inside the annular groove 23. In the present embodiment, the protective member 40 is a plate-like member having an annular shape in a plan view, and the thickness direction of the protective member 40 is parallel to the axial direction of the housing can 20. The protective member 40 is disposed in contact with the opposite surfaces in the width direction of the annular groove 23. The protective member 40 is composed of two members each having a semicircular shape in a plan view, for example, and is fitted into the annular groove 23 from radially outward of the housing can 20, thereby being secured to the annular groove 23.

Studies by the present inventors have revealed that at the time of an increase in the internal pressure of a battery caused by generation of gas within the battery due to abnormal heat generation of the battery, the housing can 20 may be damaged in a region where the annular groove 23 is disposed. As described above, the thickness direction of the protective member 40 is parallel to the axial direction of the housing can 20, and the protective member 40 is in contact with the opposite surfaces in the width direction of the annular groove 23. This configuration enables an increase in the strength of the region where the annular groove 23 is formed. This results in a reduction in damage of the annular groove 23 at the time of occurrence of abnormality of the battery. In the configuration in which the thickness direction of the protective member 40 is not parallel to the axial direction of the housing can 20 or the protective member 40 is not in contact with the respective surfaces in the width direction of the annular groove 23, the sufficient effect for increasing the strength of the region where annular groove 23 is disposed cannot be achieved.

Further, in the present embodiment, the protective member 40 is disposed such that the ratio of the area of the protective member 40 within the annular groove 23 relative to the area of the space of the annular groove 23 is greater than or equal to 80%, in an axial cross sectional view of the housing can 20. In other words, the protective member 40 occupies most part of the inside region of the annular groove 23. This configuration enables an increase in the strength of the region where the annular groove 23 is disposed. This also results in a reduction in the damage to the annular groove 23 at the time of occurrence of abnormality of the battery. Here, the area of the space of the annular groove 23 in an axial cross sectional view of the housing can 20 refers to the area of the region enclosed by a virtual line α along the outer face of the side portion 22 of the housing can 20 and the wall face of the annular groove 23.

The ratio of the area of the protective member 40 relative to the area of the space of the annular groove 23 in the axial cross sectional view of the housing can 20 may be greater than or equal to 80%, and preferably greater than or equal to 90%, and more preferably greater than or equal to 95%. Setting the ratio of the area of the protective member 40 relative to the area of the space of the annular groove 23 in the axial cross sectional view of the housing can 20 to greater than or equal to 90% enables an increase in the strength of the region where the annular groove 23 is formed. Further, as illustrated in FIG. 2, the ratio of the area of the protective member 40 relative to the area of the space in the annular groove 23 may be substantially 100%, that is; the protective member 40 may be disposed to fill the substantially entire region of the annular groove 23.

As illustrated in FIG. 2 and FIG. 3, the protective member 40 includes an insertion portion 41 that extends radially of the housing can 20 and is inserted in the annular groove 23, and a protrusion portion 42 disposed on the outward edge side of the insertion portion 41 and protrudes from the annular groove 23. In the present embodiment, the protrusion portion 42 is configured to have a larger thickness than the insertion portion 41. The protective member 40 including the protrusion portion 42 has an increased volume and therefore has an increased thermal capacity in the vicinity of the annular groove 23. This configuration enables a decrease in the temperature in the vicinity of the annular groove 23 to thereby inhibit the damage, such as melting, to the annular groove 23 at the time of occurrence of abnormal heat generation of the battery.

The insertion portion 41 has a shape that is fitted within the annular groove 23. In the present embodiment, the annular groove 23 has a radially inward end having a curved shape, and the insertion portion 41 similarly has a radially inward end having a curved shape. Further, the protrusion portion 42 is disposed such that part of the protrusion portion 42 is in contact with a part of the side face portion 22 and the opening side face portion 25.

The protective member 40 is preferably disposed not in contact with the crimped portion 26. The protective member 40 that is in contact with the crimped portion 26 causes an increase in the size of the upper part of the non-aqueous electrolyte secondary battery 10. Disposing the protective member 40 not in contact with the crimped portion 26 enables inhibition of the damage to the annular groove 23 at the time of occurrence of abnormality, without increasing the size of the upper part of the non-aqueous electrolyte secondary battery 10.

While the material of the protective member 40 is not particularly limited, the protective member 40 contains at least one selected from the group consisting of a metal material and a resin material, for example. One of these materials may be used alone or two or more materials may be used in combinations. Examples of the metal material include, for example, metals such as copper, zinc, tin, iron, and aluminum, or alloys of stainless steel or solder. The protective member 40 containing a metal material increases the thermal capacity in the vicinity of the annular groove 23. This leads to a temperature decrease in the vicinity of the annular groove 23 at the time of abnormal heat generation of the battery, thereby reducing damage, such as melting, to the annular groove 23. Examples of the resin material include, for example, polypropylene (PP), polyphenylene sulfide (PPS), polyethylene (PE), polybutylene terephthalate (PBT), perfluoroalkoxyalkane (PFA), polytetrafluoroethylene (PTFE), and polyamide (PA). Further, a material having fluidity, such as grease, may be used as the resin material. In the configuration of the protective member 40 containing a grease, a grease having heat dissipation property is preferably used in terms of increasing the thermal capacity in the vicinity of the annular groove 23.

The design of the above embodiment may be modified as appropriate without impairing the object of the present disclosure. For example, while in the above embodiment, the protective member 40 has an annular shape in a plan view, the protective member 40 may have an arc shape in a plan view. As such, the protective member 40 may be disposed only in a part of the annular groove 23 in the circumferential direction, rather than along the entire circumference of the annular groove 23. Further, the protective member 40 having an arc shape in a plan view has an arc length along the outer circumferential edge of the protective member 40, which is preferably 25% or more relative to the length of the circumference corresponding to the arc, and more preferably 50% or more relative to the length of the circumference corresponding to the arc. The protective member 40 having an arc length along the outer circumferential edge of the protective member 40, which is 25% or more relative to the length of circumference corresponding to the arc, facilitates an increase in the strength of the region where the annular groove 23 is disposed.

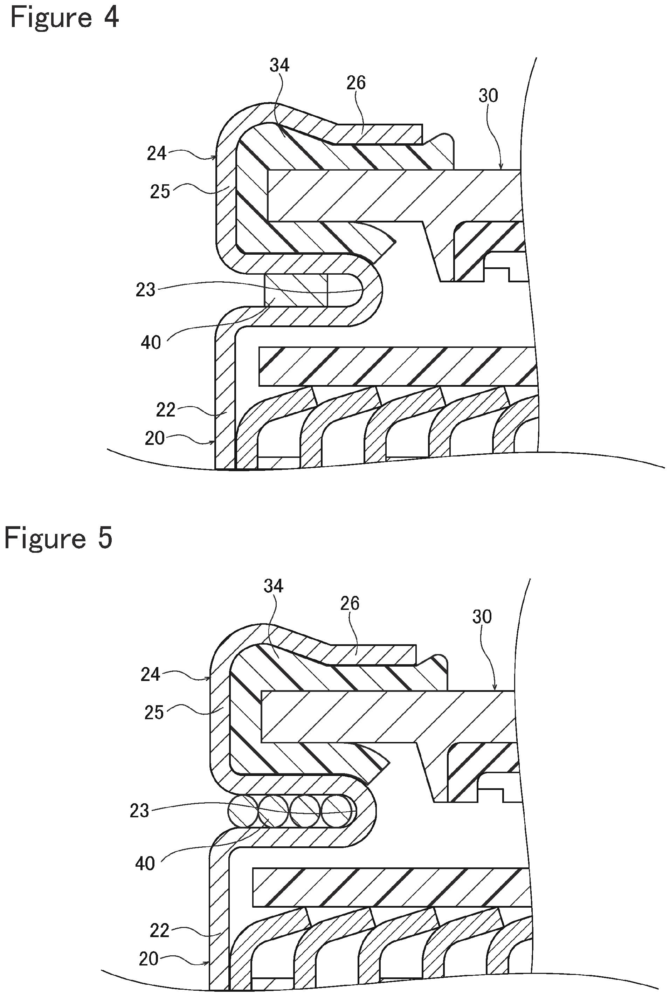

Further, while in the above embodiment, the protective member 40 has a shape that substantially fills the entire annular groove 23, the protective member 40 may have any shape whose thickness direction is parallel to the axial direction of the housing can 20 and which is in contact with the respective faces of the annular groove 23 in the width direction. For example, the protective member 40 may have a shape that fills only a part of the annular groove 23, as illustrated in FIG. 4. Therefore, the protective member 40 having a thickness direction that is parallel to the axial direction of the housing can 20 and being in contact with the respective faces of the annular groove 23 in the width direction may have a ratio of the area of the protective member 40 relative to the area of the space of the annular groove 23 in an axial cross sectional view of the housing can 20, which is less than 80%.

Also, while in the above embodiment, the protective member 40 is a plate-like member having an annular shape in a plan view, the protective member 40 having a ratio of the area, which is 80% or more, relative to the area of the space of the annular groove 23 in an axial cross sectional view of the housing can 20, may have any shape. For example, the protective member 40 may have a wire shape and extend along the circumference of the housing can 20, as illustrated in FIG. 5. In the example illustrated in FIG. 5, the protective member 40 having a wire shape and wound a plurality of times in the annular groove 23 has a ratio of the area of 80% or more relative to the area of the space of the annular groove 23.

In addition, while in the above embodiment, the protective member 40 has the protrusion portion 42, the protective member 40 may be composed only of the insertion portion 41, without having the protrusion portion 42.

### [Example]

The present disclosure will be further described below by reference to Examples; however, the present disclosure is not limited to these Examples.

### <Example 1>

### [Fabrication of Positive Electrode]

As a positive electrode active material, aluminum-containing nickel lithium cobaltate (LiNi_{0.88}Co_{0.09}Al_{0.03}O₂) was used. Then, 100 parts by mass of the positive electrode active material, 1.0 parts by mass of acetylene black that is a conductive agent, and 0.9 parts by mass of polyvinylidene fluoride (PVDF) that is a binder, were mixed in an N-methylpyrrolidone (NMP) dispersant to prepare a positive electrode mixture slurry. The prepared positive electrode mixture slurry was then uniformly applied to both sides of a positive electrode current collector composed of aluminum foil. After drying, the resulting positive electrode current collector was cut into a predetermined electrode size, and then roll-pressed with a roller to provide a belt-like positive electrode. Further, a positive electrode current collector exposed portion where a positive electrode mixture layer is not present is formed in a portion of the positive electrode in the longitudinal direction, and a positive electrode lead made of aluminum is fixed to the positive electrode current collector exposed portion by ultrasonic welding.

### [Fabrication of Negative Electrode]

As a negative electrode active material, a mixture in which 90 parts by mass of graphite powder and 10 parts by mass of Si oxide are mixed was used. Then, 100 parts by mass of the negative electrode active material, 1 part by mass of CMC that is a thickener, and 1 part by mass of styrene-butadiene rubber that is a binder were mixed in water to prepare a negative electrode mixture slurry. The negative electrode mixture slurry was then applied to both sides of a negative electrode current collector composed of copper foil. After drying, the resulting positive electrode current collector was cut into a predetermined electrode size, and then roll-pressed with a roller to provide a belt-like negative electrode. Further, a negative electrode current collector exposed portion where a negative electrode mixture layer is not present is formed at one end portion of the negative electrode in the longitudinal direction, and a negative electrode lead made of nickel is fixed to the negative electrode current collector exposed portion by ultrasonic welding.

### [Preparation of Electrode Assembly]

The positive electrode and the negative electrode thus fabricated were wound in a spiral shape with a separator interposed therebetween to prepare a wound electrode assembly. As the separator, a polyethylene microporous film having, on one side, a heat-resistant layer in which polyamide and alumina filler are dispersed was used.

### [Preparation of Non-Aqueous Electrolyte]

LiPF₆ was dissolved at a concentration of 1.2 moles/liter in a mixed solvent prepared by mixing ethylene carbonate (EC), ethyl methyl carbonate (EMC), and dimethyl carbonate (DMC) in a 3:3:4 volume ratio (25°C) to prepare a non-aqueous electrolyte.

### [Fabrication of Non-Aqueous Electrolyte Secondary Battery]

A metal can composed of a cylindrical steel member with a bottom having a diameter φ of 21 mm and a height of 70 mm was used as a housing can. The electrode assembly, with insulating plates disposed on top and bottom, respectively, was housed in the housing can, and thereafter, the negative electrode lead was welded onto the bottom portion of the housing can. Then, the housing can was subjected to spinning to form an annular groove. At this time, the annular groove was created to have a width (axial length) of 0.4 mm and a depth (radial length) of 2.0 mm.

An internal terminal plate was disposed on top of the annular groove with a gasket interposed between the internal terminal plate and the annular groove, and the positive electrode lead was ultrasonically welded to the upper face of the internal terminal plate. Subsequently, after depressurization and degassing, an external terminal plate was placed on the internal terminal plate, and the external terminal plate and the internal terminal plate were welded. Then, an upper end portion of the housing can was crimped to secure a sealing assembly on top of the housing can. Finally, two members composed of copper, each having a semicircular shape in a plan view, are fitted in the annular groove from the opposite sides of the housing can, to thereby produce a non-aqueous electrolyte secondary battery having a copper ring serving as a protective member having an annular shape in a plan view. The protective member has a cross sectional shape illustrated in FIG. 1. Thus, the ratio of the area (which will be hereinafter referred to as a "area occupying ratio") of the protective member relative to the area of the space of the annular groove in an axial cross section of the housing can is substantially 100%.

### <Example 2>

A non-aqueous electrolyte secondary battery was fabricated in a similar manner to Example 1 except that, in fabricating the non-aqueous electrolyte secondary battery, a solder wire (composition: Sn 99%, Ag 0.3%, Cu 0.7%, manufactured by HOZAN, HS-341) having a substantially circular shape in a cross sectional view (diameter: 0.3 mm) was used as a protective member. Specifically, the solder wire was wound around the annular groove such that the solder wire was disposed in the entire region of the annular groove. The area occupying ratio of the protective member calculated from the length of the solder wire was 85%.

### <Example 3>

A non-aqueous electrolyte secondary battery was fabricated in a similar manner to Example 1 except that, in fabricating the non-aqueous electrolyte secondary battery, a thermal conductive grease (manufactured by SANWA SUPPLY INC., TK-GR2) having a thermal conductivity of 16 W/(m.K) was used as a protective member. Specifically, the entire region of the annular groove 23 was filled with the grease. Namely, the area occupying ratio of the protective member was substantially 100%.

### <Comparative Example 1>

A non-aqueous electrolyte secondary battery was fabricated in a similar manner to Example 1 except that a protective member was not disposed in fabrication of the non-aqueous electrolyte secondary battery.

### [Evaluation of Heating Test of Battery]

Three batteries were made according to each of the Examples 1 and 2 and the Comparative Example 1, and two batteries were made according to Example 3. After each battery was placed in an oven of 500°C for 10 minutes heating, heating was stopped. Then, the housing cans were externally observed for evaluation as to whether or not the annular grooves had a hole (whether or not gas has ejected through the annular groove). The evaluation results of Examples 1 to 3, and Comparative Example 1 were shown in Table 1.

**[Table 1]**

| | Protective member | a ratio of an area of the protective member | Number of Batteries with Holes |
|---|---|---|---|
| Example1 | copper ring | ∼100% | 0/3 |
| Example2 | solder wire | 85% | 0/3 |
| Example3 | grease | ∼100% | 0/2 |
| Comparative Example 1 | - | - | 3/3 |

As shown in Table 1, all of the batteries in Comparative Example 1 had holes, whereas none of the batteries in Examples 1 to 3 had holes. This is assumed to be because of an increase in the strength of the annular groove due to the protective member disposed in the annular groove.

The present disclosure will be further described according to the following embodiments:
Configuration 1: A non-aqueous electrolyte secondary battery comprising:
   an electrode assembly including a positive electrode and a negative electrode;
   a non-aqueous electrolyte;
   a cylindrical housing can having a bottom portion, the housing can housing the electrode assembly and the non-aqueous electrolyte; and
   a sealing assembly that closes an opening portion of the housing can, wherein
   the housing can includes, on a side face portion of the housing can, an annular groove that is recessed radially inward of the housing can,
   a protective member is disposed within the annular groove, and
   the protective member has a thickness direction that is parallel to an axial direction of the housing can, and the protective member is in contact with opposite faces, in a width direction, of the annular groove.
Configuration 2: A non-aqueous electrolyte secondary battery comprising:
   an electrode assembly including a positive electrode and a negative electrode;
   a non-aqueous electrolyte;
   a cylindrical housing can having a bottom portion, the housing can housing the electrode assembly and the non-aqueous electrolyte; and
   a sealing assembly that closes an opening portion of the housing can, wherein
   the housing can includes, on a side face portion of the housing can, an annular groove that is recessed radially inward of the housing can,
   a protective member is disposed within the annular groove, and
   a ratio of an area of the protective member within the annular groove relative to an area of a space of the annular groove in an axial cross sectional view of the housing can is equal to or greater than 80%.
Configuration 3 The non-aqueous electrolyte secondary battery according to configuration 1 or 2, wherein
   the housing can has, at the opening end portion, a crimped portion extending radially inward of the housing can, and
   the protective member is not in contact with the crimped portion.
Configuration 4: The non-aqueous electrolyte secondary battery according to any one of configurations 1 to 3, wherein
   the protective member has an annular shape in a plan view.
Configuration 5: The non-aqueous electrolyte secondary battery according to any one of configurations 1 to 3, wherein
   the protective member has an arc shape in a plan view, and
   a length of an arc along an outer circumferential edge of the protective member is equal to or greater than 25% of a length of a circumference corresponding to the arc.
Configuration 6: The non-aqueous electrolyte secondary battery according to any one of configurations 1 to 5, wherein
   the protective member includes:
   an insertion portion inserted in the annular groove; and
   a protrusion portion disposed on an outward edge side of the insertion portion and protruding from the annular groove.
Configuration 7: The non-aqueous electrolyte secondary battery according to any one of configurations 1 to 6, wherein
   the protective member contains at least one selected from the group consisting of a metal material and a resin material.

### REFERENCE SIGNS LIST

10 non-aqueous electrolyte secondary battery, 11 positive electrode, 12 negative electrode, 13 separator, 14 electrode assembly, 16,17 insulating plate, 18 positive electrode lead, 19 negative electrode lead, 20 housing can, 21 bottom portion, 22 side face portion, 23 annular groove, 24 opening portion, 25 opening side face portion, 26 crimped portion, 30 sealing assembly, 31 internal terminal plate, 31A thick portion, 31B center portion, 31C air hole, 32 insulating member, 32A opening portion, 32B air hole, 33 external terminal plate, 33A thin portion, 34 gasket, 40 protective member, 41 insertion portion, 42 protrusion portion, α virtual line.

## Claims

1. A non-aqueous electrolyte secondary battery comprising:
an electrode assembly including a positive electrode and a negative electrode;
a non-aqueous electrolyte;
a cylindrical housing can having a bottom portion, the housing can housing the electrode assembly and the non-aqueous electrolyte; and
a sealing assembly that closes an opening portion of the housing can, wherein
the housing can includes, on a side face portion of the housing can, an annular groove that is recessed radially inward of the housing can,
a protective member is disposed within the annular groove, and
the protective member has a thickness direction that is parallel to an axial direction of the housing can, and the protective member is in contact with opposite faces, in a width direction, of the annular groove.

2. A non-aqueous electrolyte secondary battery comprising:
an electrode assembly including a positive electrode and a negative electrode;
a non-aqueous electrolyte;
a cylindrical housing can having a bottom portion, the housing can housing the electrode assembly and the non-aqueous electrolyte; and
a sealing assembly that closes an opening portion of the housing can, wherein
the housing can includes, on a side face portion of the housing can, an annular groove that is recessed radially inward of the housing can,
a protective member is disposed within the annular groove, and
a ratio of an area of the protective member within the annular groove relative to an area of a space of the annular groove in an axial cross sectional view of the housing can is equal to or greater than 80%.

3. The non-aqueous electrolyte secondary battery according to claim 1 or 2, wherein
the housing can has, at the opening end portion, a crimped portion extending radially inward of the housing can, and
the protective member is not in contact with the crimped portion.

4. The non-aqueous electrolyte secondary battery according to claim 1 or 2, wherein
the protective member has an annular shape in a plan view.

5. The non-aqueous electrolyte secondary battery according to claim 1 or 2, wherein
the protective member has an arc shape in a plan view, and
a length of an arc along an outer circumferential edge of the protective member is equal to or greater than 25% of a length of a circumference corresponding to the arc.

6. The non-aqueous electrolyte secondary battery according to claim 1 or 2, wherein
the protective member includes:
an insertion portion inserted in the annular groove; and
a protrusion portion disposed on an outward edge side of the insertion portion and protruding from the annular groove.

7. The non-aqueous electrolyte secondary battery according to claim 1 or 2, wherein
the protective member contains at least one selected from the group consisting of a metal material and a resin material.
